# EUROPEAN PATENT APPLICATION

(11) **EP 4 403 267 A1**
(43) Date of publication of application: **24.07.2024**
(21) Application number: 22869733.0
(22) Date of filing: 12.08.2022
(51) Int. Cl.: B05B 5/08, A01M 7/00, B05B 5/025

(54) **ELECTROSTATIC SPRAYING DEVICE**

(30) Priority: 16.09.2021 JP 2021151238
(71) Applicant: Arimitsu Industry Co., Ltd., Osaka-shi, Osaka 537-0001 (JP)
(72) Inventor: KAMEI, Noriyuki, Shiki-gun, Nara 636-0234 (JP)
(74) Representative: dompatent von Kreisler Selting Werner - Partnerschaft von Patent- und Rechtsanwälten mbB
(86) International application number: PCT/JP2022/030710
(87) International publication number: WO 2023/042586

(57) **Abstract**

Provided is an electrostatic spraying device capable of sufficiently charging a sprayed liquid. According to the present disclosure, there is provided an electrostatic spraying device comprising: a spray nozzle (12) which sprays a liquid (chemical solution); and a charging section (24) which charges the liquid (chemical solution) sprayed from the spray nozzle (12), wherein the spray nozzle (12) is provided with a distal end movable around a base end, and wherein the charging section (24) has a shape along a movement path of the distal end.

## Description

### [Technical Field]

The present disclosure relates to an electrostatic spraying device.

### [Background Art]

Conventionally, in order to spray a chemical solution (liquid) on a field, an electrostatic spraying device is used which includes a spray nozzle that sprays the chemical solution and a charging section that charges the chemical solution sprayed from the spray nozzle.

The chemical solution sprayed from the spray nozzle is charged with a polarity opposite to that of a voltage applied to an electrode. The charged chemical solution spreads toward the field, and evenly adheres to the crops planted in the field due to the electrostatic effect.

The electrostatic spraying device described in Patent Document 1 is a boom sprayer, and a plurality of spray nozzles are arranged in parallel in the longitudinal direction of a support rod (boom). A plurality of mounted portions are arranged in parallel along the longitudinal direction of the support rod. The charging section is a cable and is spanned between the plurality of mounted portions. Two charging sections or the outgoing path and the incoming path of one charging section are separated from each other with a spray area from the spray nozzle interposed therebetween. The charging section functions as an electrode.

### [Prior Art Document]

### [Patent Document]

[Patent Document 1] Japanese Patent Laid-Open Publication No. 2015-174035

### [Summary of Invention]

### [Problems to be Solved by Invention]

In order to improve the workability of spraying the chemical solution, there is a desire to change the direction of the spray nozzle by moving the distal end of the spray nozzle around its base end.

However, in the case of the electrostatic spraying device described in Patent Document 1, since the separation distance between the spray area and the charging section is changed when the direction of the spray nozzle is changed, the chemical solution cannot be sufficiently charged.

An object of the present disclosure is to provide an electrostatic spraying device capable of sufficiently charging a sprayed liquid.

### [Means for Solving Problems]

According to the present disclosure, there is provided an electrostatic spraying device comprising: a spray nozzle which sprays a liquid; and a charging section which charges the liquid sprayed from the spray nozzle, wherein the spray nozzle is provided with a distal end movable around a base end, and wherein the charging section has a shape along a movement path of the distal end.

In the present disclosure, the direction of the spray nozzle can be changed by moving the distal end of the spray nozzle around the base end thereof.

Since the charging section has a shape along the movement path of the distal end of the spray nozzle, it is possible to maintain a constant separation distance between the charging section and the spray area from the spray nozzle even when the distal end of the spray nozzle moves to change the direction of the spray nozzle. Therefore, the sprayed liquid can be sufficiently charged.

According to the present disclosure, there is provided the electrostatic spraying device, wherein the spray nozzle is provided with the distal end swingable around the base end, wherein the charging section is a strip plate extending in an arc shape, wherein the two charging sections are arranged to face each other with an appropriate separation distance in a thickness direction, and wherein a spray area from the spray nozzle is disposed between the two charging sections.

In the present disclosure, since the distal end of the spray nozzle swings around the base end thereof, the movement path of the distal end of the spray nozzle has an arc shape. Since the charging section is a band plate extending in an arc shape, the charging section has a shape along the movement path of the distal end.

Since two charging sections are arranged to face each other with an appropriate separation distance in the thickness direction and the spray area from the spray nozzle is disposed between two charging sections, the sprayed liquid can be evenly charged.

According to the present disclosure, there is provided the electrostatic spraying device, further comprising: a rod; a first support member that is attached to the rod and supports a power supply line supplying power to the charging section; and a second support member that is attached to the first support member and supports the charging section, wherein the second support member constitutes a part of a power supply path from the power supply line to the charging section.

In the present disclosure, the first support member is attached to the rodshaped support body, the second support member is attached to the first support member, and the second support member supports the charging section. Since the second support member constitutes a part of the power supply path, power is supplied from the power supply line to the charging section through the second support member.

The first support member serves as a member that supports the power supply line and a member that connects the second support member to the support body and the second support member serves as a member that supports the charging section and a member that supplies power to the charging section. Therefore, the number of parts can be reduced.

According to the present disclosure, there is provided the electrostatic spraying device, wherein the charging section is made of conductive resin.

In the present disclosure, since the charging section is made of conductive resin, the charging section is lighter than, for example, the charging section made of metal. Further, since the charging section made of conductive resin has a higher electrical resistance than, for example, the charging section made of metal, the current flowing through the charging section is weakened. Therefore, the shock caused by electric shock generated when a human touches the charging section is suppressed.

Since the conductive resin is suitable for forming a member with a complicated shape, it is easy to obtain a charging section having a shape that follows the movement path of the distal end of the spray nozzle.

### [Effects of Invention]

According to the electrostatic spraying device of the present disclosure, the sprayed liquid can be sufficiently charged.

### [Brief Description of Drawings]

FIG. 1 is a perspective view of an electrostatic spraying device according to an embodiment.
FIG. 2 is a schematic view of the electrostatic spraying device.
FIG. 3 is a perspective view in the vicinity of the spray nozzle.
FIG. 4 is a front view in the vicinity of the spray nozzle.
FIG. 5 is a plan view in the vicinity of the spray nozzle.
FIG. 6 is a schematic view illustrating a relationship between the swinging of the spray nozzle and the shape of the charging section.

### [Mode for Carrying out Invention]

Hereinafter, an embodiment of the present disclosure will be described.

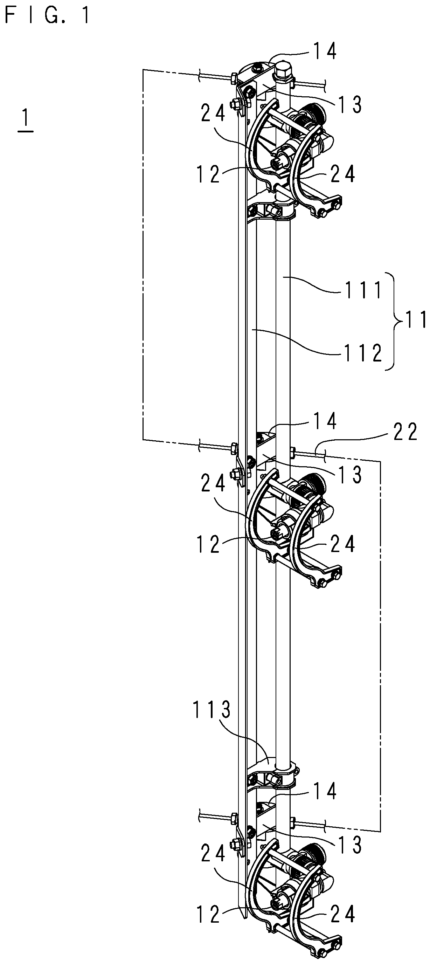

FIG. 1 is a perspective view of an electrostatic spraying device according to the embodiment.

In the drawings, Reference Numeral 1 denotes an electrostatic spraying device and the electrostatic spraying device 1 includes a support rod 11 and a plurality of spray nozzles 12.

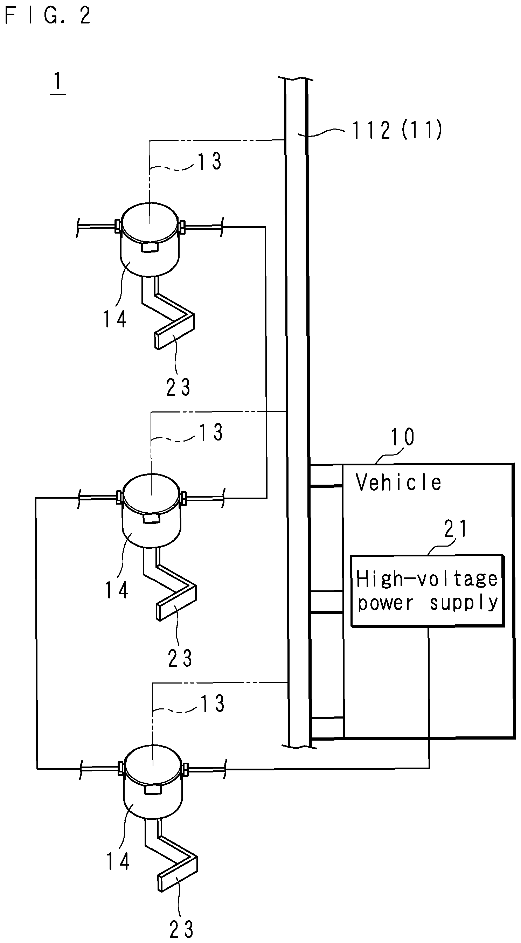

FIG. 2 is a schematic view of the electrostatic spraying device 1.

The support rod 11 is supported by, for example, a hand-pushed or selfpropelled trolley 10, and moves together with the trolley 10.

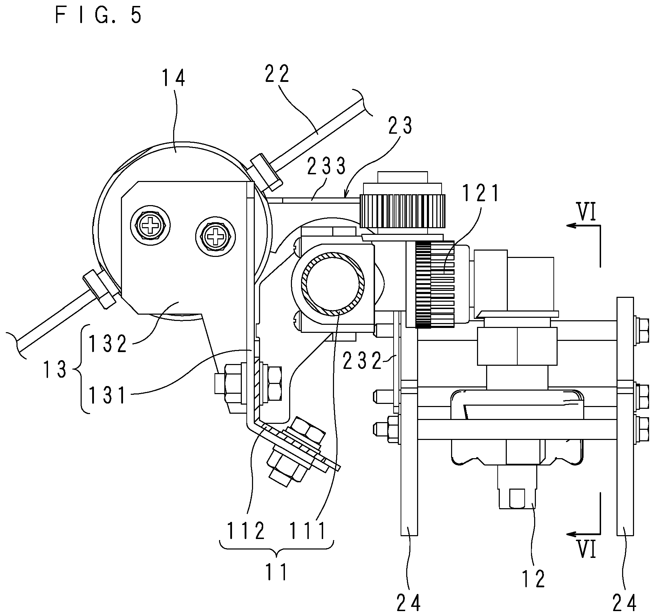

As shown in FIG. 1, the support rod 11 includes a nozzle support 111 and a rod 112. The nozzle support 111 is a rod having an annular cross section. The rod 112 has an L-shaped cross section (see FIG. 5 described below). The nozzle support 111 and the rod 112 are fixed to each other in parallel by appropriate fixing fittings 113.

The spray nozzle 12 is provided in the nozzle support 111 of the support rod 11. The plurality of spray nozzles 12 are arranged at appropriate intervals in the longitudinal direction of the support rod 11. A chemical solution (herbicide, plant growth regulator, or the like) is supplied to the spray nozzle 12 through a liquid supply path provided inside the nozzle support 111. The spray nozzle 12 sprays the supplied chemical solution.

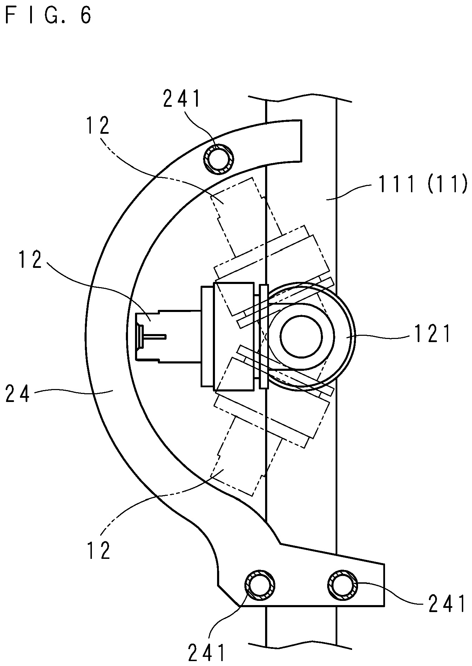

The spray nozzle 12 is provided so that its distal end can swing around its base end (see FIG. 6 described below).

During use of the electrostatic spraying device 1, the support rod 11 is held so as to extend vertically, for example. The trolley 10 moves across the field so that the support rod 11 passes along the sides of the crops. The distal end of the spray nozzle 12 is directed toward the crop.

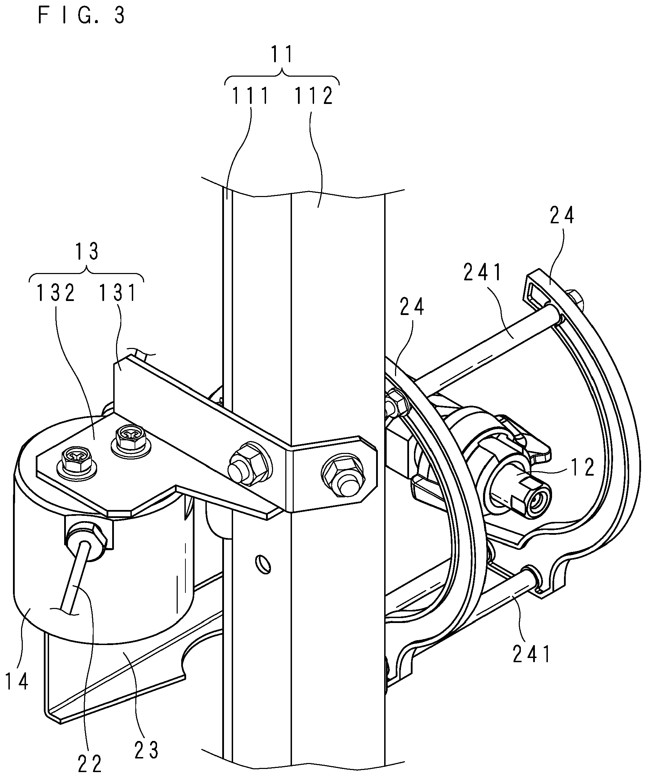

FIG. 3 is a perspective view in the vicinity of the spray nozzle 12.

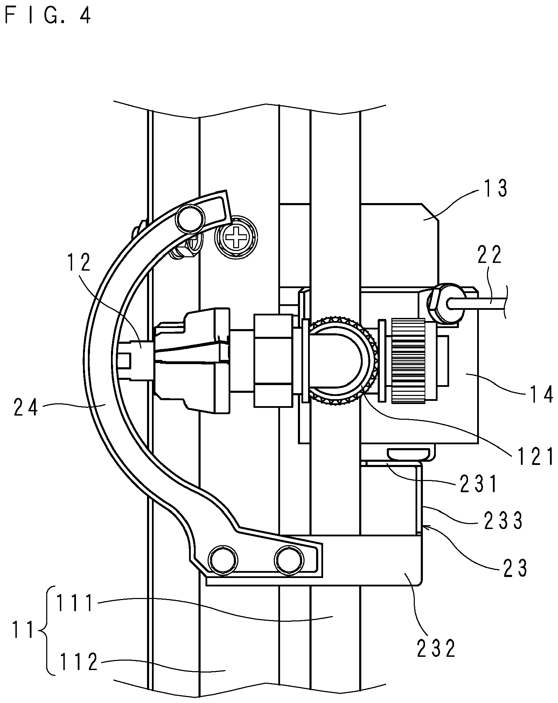

FIG. 4 is a front view in the vicinity of the spray nozzle 12.

FIG. 5 is a plan view in the vicinity of the spray nozzle 12.

As shown in FIGS. 3 to 5, the electrostatic spraying device 1 includes each of a plurality of support fittings 13 and a housing 14 (first support member).

The support fitting 13 is provided on the rod 112 of the support rod 11 at an appropriate separation distance from the spray nozzle 12. The plurality of support fittings 13 are arranged at appropriate intervals in the longitudinal direction of the support rod 11. The configuration of the support fitting 13 is not limited, but the support fitting 13 integrally includes at least a first portion 131 attached to the support rod 11 and a second portion 132 attached to the housing 14.

The housing 14 has an insulating property and is made of, for example, synthetic resin. The housing 14 is attached to the rod 112 of the support rod 11 through the support fitting 13. As shown in FIGS. 1 and 2, the plurality of housings 14 are arranged in the longitudinal direction of the support rod 11.

As shown in FIG. 2, the electrostatic spraying device 1 includes a high-voltage power supply 21 and a power supply line 22.

The high-voltage power supply 21 includes, for example, a battery that outputs a DC voltage, a booster circuit that boosts the output of the battery, and is mounted on the trolley 10. The negative output terminal of the high-voltage power supply 21 is grounded via a ground wire (not shown). The positive output terminal of the high-voltage power supply 21 is connected to the power supply line 22.

As shown in FIGS. 2 to 5, the electrostatic spraying device 1 includes the same number of support members 23 (second support members) as the number of housings 14.

The support member 23 has conductivity, and is made of, for example, metal. The support member 23 is attached to the housing 14. The configuration of the support member 23 is not limited, but the support member 23 of this embodiment integrally includes a first portion 231, a second portion 232, and a third portion 233 in the form of a plate. The first portion 231 is attached to the housing 14. The second portion 232 supports a charging section 24 described below. The third portion 233 connects the first portion 231 and the second portion 232.

The power supply line 22 is spanned between the plurality of housings 14. The power supply line 22 is drawn into each housing 14 and is electrically connected to the support member 23 through a power supply path (not shown) accommodated in the housing 14.

The support fitting 13, the housing 14, and the support member 23 are sufficiently separated from the spray nozzle 12. Therefore, there is no risk that these will disturb the spraying of the chemical solution from the spray nozzle 12, and there is no risk that the chemical solution that adheres to these will flow into the spray nozzle 12.

FIG. 6 is a schematic view illustrating a relationship between the swinging of the spray nozzle 12 and the shape of the charging section 24. FIG. 6 corresponds to a cross-sectional view taken along a line VI-VI of FIG. 5.

As shown in FIGS. 4 to 6, the spray nozzle 12 is supported by a support pipe 121.

The support pipe 121 extends in a direction orthogonal to the longitudinal direction of the support rod 11 and is fixed to the nozzle support 111. If the longitudinal direction of the support rod 11 is vertical, the longitudinal direction of the support pipe 121 is also vertical. One end of the support pipe 121 in the longitudinal direction is connected to a liquid supply path of the support rod 11.

The base end of the spray nozzle 12 is connected to the other end of the support pipe 121 in the longitudinal direction. The spray nozzle 12 is supported by the support pipe 121 so that the spray nozzle 12 is swingable around the support pipe 121 in a virtual plane perpendicular to the support pipe 121.

The spray nozzle 12 swings when the operator manually applies external force to the spray nozzle 12. The operator adjusts the direction of the spray nozzle 12 within a predetermined range (for example, ±60° with respect to the state in which the spray nozzle 12 is oriented horizontally) depending on the positional relationship between the spray nozzle 12 and the crops planted in the field. In FIG. 6, the horizontally oriented spray nozzle 12 is represented by a solid line, and the spray nozzle 12 swung approximately 60° from the horizontally oriented state is represented by a two-dot chain line.

As shown in FIGS. 1, 3, and 5, the electrostatic spraying device 1 includes two charging sections 24 for each spray nozzle 12.

The charging section 24 is a strip plate extending in an arc shape (see FIGS. 4 and 6). The charging section 24 is made of conductive resin and is not covered with an insulator.

Two charging sections 24 are arranged to face each other with an appropriate separation distance in the thickness direction. Two charging sections 24 are integrated by being connected through a plurality of connecting rods 241. The connecting rod 241 extends in the facing direction of two charging sections 24. The connecting rods 241 are, for example, straight rods having an annular cross section, and the plurality of connecting rods 241 are separated from each other with an appropriate separation distance in the longitudinal direction of the charging section 24 (see FIG. 6). The connecting rod 241 has conductivity, and is made of, for example, metal.

One of two charging sections 24 is attached to the second portion 232 of the support member 23 so that a spray area (not shown) from the spray nozzle 12 is disposed between two charging sections 24(the spray area is an area where the liquid is sprayed from the spray nozzle 12). The spray area has, for example, a cone shape or a fan shape with the apex of the spray nozzle 12 as the apex.

Power is supplied from the power supply line 22 to the charging section 24 and the charging section 24 functions as a positive electrode for charging a chemical solution. Power is supplied from the power supply line 22 to the charging section 24 through the support member 23 and the power supply path accommodated in the housing 14. As a result, a current flows through the surface of the charging section 24.

The charging section 24 is separated from the spray nozzle 12 by a distance in which the spraying of the chemical solution from the spray nozzle 12 is not disturbed or the chemical solution adhering to the charging section 24 does not flow into the spray nozzle 12. Further, the charging section 24 is disposed in the vicinity of the spray area of the spray nozzle 12 so that the chemical solution sprayed from the spray nozzle 12 can be sufficiently inductively charged.

According to the above-described electrostatic spraying device 1, since the operator can change the direction of the spray nozzle 12, the workability of spraying the chemical solution can be improved.

The charging section 24 extends along the movement path of the distal end of the spray nozzle 12 and can maintain a constant separation distance between the spray area from the spray nozzle 12 and the charging section 24 even when the distal end of the spray nozzle 12 moves to change the direction of the spray nozzle 12. Therefore, the sprayed chemical solution can be sufficiently charged. Further, since the spray area from the spray nozzle 12 is disposed between two charging sections 24, the sprayed chemical solution can be evenly charged.

More preferably, a part where the liquid film is formed in the spray area is disposed between two charging sections 24. By appropriately setting the width of the charging section 24 which is a band plate, the sprayed chemical solution can be sufficiently charged even if the position of the liquid film is slightly shifted in the spray direction.

The chemical solution sprayed from the spray nozzle 12 spreads toward the crops. Since the charging section 24 is a positive electrode, a negative charge is given to the chemical solution sprayed from the spray nozzle 12. When a negative charge exists near a crop, the crop becomes polarized, for example, so that the upper and lower surfaces of the leaf are positive and the inside of the leaf is negative. For this reason, the negatively charged chemical solution is attracted to the crop and evenly adheres to both the upper and lower surfaces of the leaves.

The housing 14 serves as a member that supports the power supply line and a member that connects the support member 23 to the support rod 11 and the support member 23 serves as a member that supports the charging section 24 and a member that supplies power to the charging section 24. Therefore, the number of parts can be reduced.

The charging section 24 is not limited to being made of conductive resin, and may be made of, for example, metal. However, the charging section 24 made of conductive resin is lighter than the charging section 24 made of metal. Further, since the charging section 24 made of conductive resin has a higher electrical resistance than the charging section 24 made of metal, the current flowing through the charging section 24 is weakened. Therefore, the shock caused by electric shock generated when a human touches the charging section 24 is suppressed.

Since conductive resin is suitable for forming members with complicated shapes, it is easy to obtain the charging section 24 in a shape that follows the movement path of the distal end of the spray nozzle 12.

Furthermore, if the movement paths of the distal ends of the spray nozzles are the same even if the sizes or shapes of the plurality of spray nozzles 12 are different from each other, it is possible to use the charging section 24 in common.

For example, the charging section 24 is not limited to a band plate extending in an arc shape, but may be a rod body extending in an arc shape. The charging section 24 may have a shape along the movement path of the distal end of the spray nozzle 12. For example, when the distal end of the spray nozzle 12 moves in an annular shape, the charging section 24 may have an annular shape coaxial with the movement path of the distal end of the spray nozzle 12.

The spray nozzle 12 may be configured to be driven by, for example, a motor and automatically swing.

The support rod 11 may not include the rod 112. In this case, the housing 14 is attached to the nozzle support 111.

The embodiment disclosed herein is illustrative in all respects and should not be considered restrictive. The scope of the present disclosure is not intended to have the above-described meaning, but is intended to include meanings equivalent to the scope of the claims and all changes within the scope of the claims.

### [Description of Reference Numerals]

- 1: Electrostatic spraying device
- 112: Rod
- 12: Spray nozzle
- 14: Housing (first support member)
- 22: Power supply line
- 23: Support member (second support member)
- 24: Charging section

## Claims

1. An electrostatic spraying device comprising:
a spray nozzle which sprays a liquid; and
a charging section which charges the liquid sprayed from the spray nozzle,
wherein the spray nozzle is provided with a distal end movable around a base end, and
wherein the charging section has a shape along a movement path of the distal end.

2. The electrostatic spraying device according to claim 1,
wherein the spray nozzle is provided with the distal end swingable around the base end,
wherein the charging section is a strip plate extending in an arc shape,
wherein the two charging sections are arranged to face each other with an appropriate separation distance in a thickness direction, and
wherein a spray area from the spray nozzle is disposed between the two charging sections.

3. The electrostatic spraying device according to claim 1 or 2, further comprising:
a rod;
a first support member that is attached to the rod and supports a power supply line supplying power to the charging section; and
a second support member that is attached to the first support member and supports the charging section,
wherein the second support member constitutes a part of a power supply path from the power supply line to the charging section.

4. The electrostatic spraying device according to any one of claims 1 to 3,
wherein the charging section is made of conductive resin.
